Europäisches Patentamt

European Patent Office

Office européen des brevets

(19)

(11) **EP 1 253 752 A2**

(12) **EUROPEAN PATENT APPLICATION**

(43) Date of publication:
**30.10.2002 Bulletin 2002/44**

(51) Int Cl.[7]: **H04L 12/56**, H04Q 11/04

(21) Application number: **02009145.0**

(22) Date of filing: **24.04.2002**

(84) Designated Contracting States:
**AT BE CH CY DE DK ES FI FR GB GR IE IT LI LU MC NL PT SE TR**
Designated Extension States:
**AL LT LV MK RO SI**

(30) Priority: **27.04.2001 JP 2001131588**

(71) Applicant: **MITSUBISHI DENKI KABUSHIKI KAISHA**
**Tokyo 100-8310 (JP)**

(72) Inventors:
• **Kitayama, Kenji**
 **Chiyoda-ku, Tokyo 100-8310 (JP)**
• **Yokotani, Tetsuya**
 **Chiyoda-ku, Tokyo 100-8310 (JP)**
• **Murakami, Ken**
 **Chiyoda-ku, Tokyo 100-8310 (JP)**
• **Ichihashi, Tatsuki**
 **Chiyoda-ku, Tokyo 100-8310 (JP)**

(74) Representative: **Pfenning, Meinig & Partner**
 **Mozartstrasse 17**
 **80336 München (DE)**

(54) **Optical line terminal, apon system and cell delay variation control method**

(57)     An optical line terminal in an ATM based passive optical network (APON; ATM-PON) system in which dynamic bandwidth assignment is performed between the optical line terminal and an optical network terminal, including a shaper unit for shaping cells from the optical network terminal and a usage parameter control for monitoring the traffic of the cells shaped by the shaper unit.

## FIG.1

APON SECTION

PLACE SHAPER BEFORE UPC TO CANCEL CDV

EP 1 253 752 A2

**Description**

BACKGROUND OF THE INVENTION

1. Field of the Invention

The present invention relates to a cell delay variation control method for controlling cell delay variation (CDV) occurring in an ATM based passive optical network section (APON section) in an ATM based passive optical network (ATM-PON) system, an ATM based optical network system (APON system) in which CDV is controlled, and optical line terminal in which CDV is controlled.

2. Description of the Related Art

An APON system provides a high-speed, economical subscriber system by allowing a single office interface to accommodate a plurality of subscribers using optical fibers and optical splitters. Media access control called dynamic bandwidth assignment (DBA) is known as a technology necessary in APON. DBA is a control scheme for dynamically assigning resources (bandwidth) between users in accordance with a traffic status of the users.

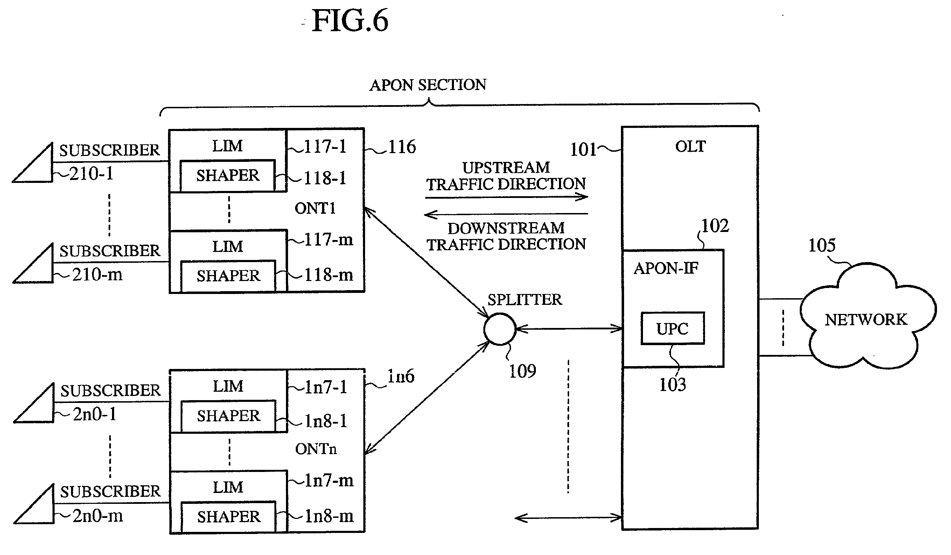

Fig. 6 shows an example of construction according an APON system according to the related art. Referring to Fig. 6, traffic (downstream traffic) from an optical line terminal (OLT) 101 to the optical network terminals (ONT) 116-1n6 is broadcast to the ONTs 116-1n6 using an optical splitter 109. Each ONT only retrieves traffic destined to the ONT. Traffic from the ONTs 116-1n6 to the OLT 101 (upstream traffic) has one-to-one correspondence with a grant (transmission enable signal) from the OLT 101. In response to a grant, transmission of one cell is enabled. A grant is responsible for a bandwidth in the upstream traffic. DBA dynamically changes the occurrence of grants in accordance with the congestion status of a grant control unit.

For example, when each ONT is assigned a grant control unit, a bandwidth assigned to the ONT is changed by changing the frequency of generation of grants in accordance with the congestion status of the upstream traffic in the ONTs 116-1n6. With this, the bandwidth load in the APON section is optimized.

Generally, in DBA, a minimum assigned bandwidth (BWmin) is first assigned to a grant control unit. BWmin is preset to be greater than a sum of virtual path capacity for the grant control unit. The congestion status in the grant control unit is determined by the OLT 101 or the ONTs 116-1n6. Dynamic bandwidth assignment is performed at intervals of a bandwidth update period (Tup) for each grant control unit. Since DBA is a traffic control method designed to take a full advantage of a surplus bandwidth, it is desirable that a maximum assigned bandwidth (BWmax) is set to be a maximum bandwidth secured for DBA. For example, for a grant control unit adapted for a constant bit rate (CBR), the only requirement is to continue to ensure that a bandwidth corresponding to a fixed communication speed is available. Assignment of an additional bandwidth is not necessary. That is, for such a grant control unit, it is not necessary to assign an new bandwidth. BWmax is to be set up for other grant control units.

In the APON system according to the related art as described above, an abnormal CDV of cells in a VC connection may be observed in a usage parameter control (UPC) 103 in the OLT 101 as a result of employing DBA. As a result, a cell inflow violation may occur in the UPC 103, causing cells to be discarded in an unjustifiable manner. A tag may be attached to cells that caused violation. A description will now be given of this phenomenon, based on the operation of connection control in the APON system.

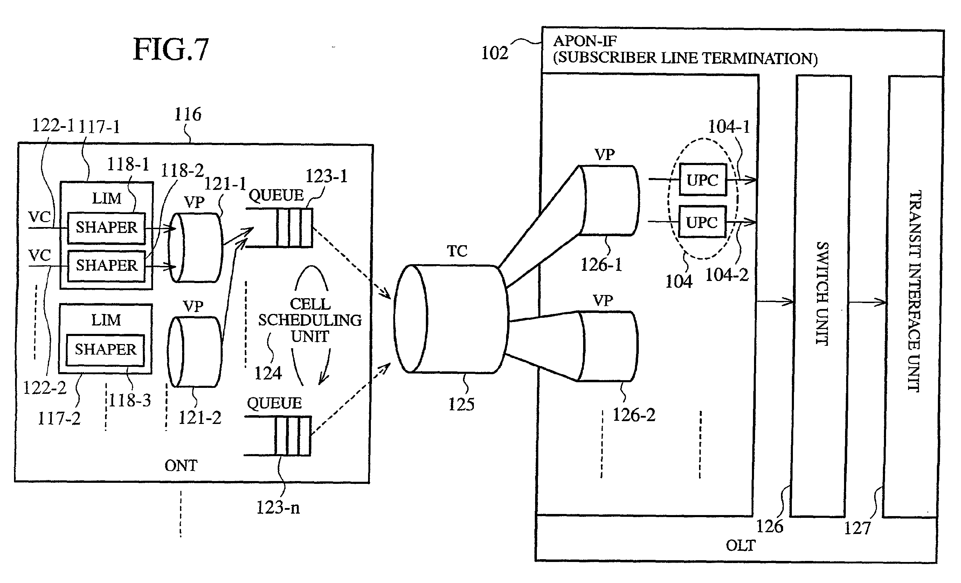

Fig. 7 shows an example of operation in connection control according to the related art. VC connections 122-1 and 122-2 are shaped by line interface modules (LIM) 117-1 and 117-2, respectively. Thus, even when the bandwidth assigned according to DBA increases, the cell flow in the LIMs 117-1 and 117-2 is prevented from being increased. However, since a large number of VC connections including the connections 122-1 and 122-3 are multiplexed in queues 123-1 - 123-n when the cells are output from the ONT 116 to the OLT 101, cells carried by the VC connections 122-1 and 122-2 may be accumulated in the queues. When cells carried by a particular VC connection occupy the majority of a buffer, a group of cells belonging to that particular VC connection, which have been accumulated in the buffer, are transmitted at a dash, responsive to an increase in the bandwidth assigned according to DBA. As a result of this, the UPC 103 of the OLT 101 may observe an abnormal CDV. A phenomenon of this type cannot be prevented under the related-art APON system protocol. The phenomenon described above is a cell inflow violation due to an abnormal CDV caused as a result of employing DBA. Preferably, the violation of this type should not be experienced by the user serviced by the APON system.

A specific example of increase in CDV will now be described.

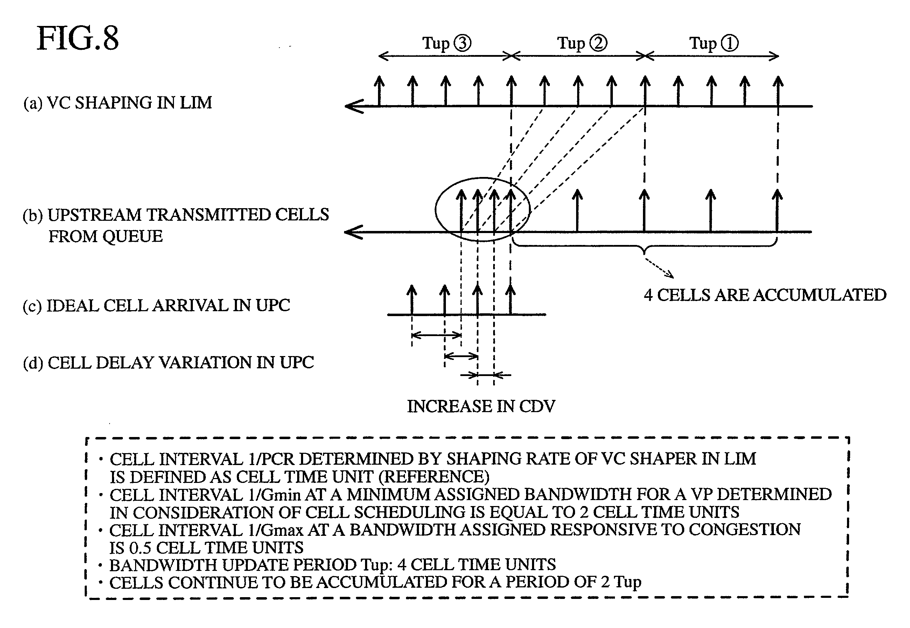

Fig. 8 is a time chart showing a specific example of phenomenon in which an abnormal CDV is observed in an APON system according to the related art. In Fig. 8, the VC connections 122-1 and 122-2 are preset. In each of the connections, a maximum cell rate (PCR: peak cell rate) produces a period of 1/PCR, which is equal to 1 cell time unit (reference), and a minimum cell rate (MCR: minimum cell rate) produces a period of 1/MCR, which is equal to 4 cell time units. A bandwidth update period of 4 cell time units is defined by DBA. Transmitted cells in each of the VCs are shaped in the LIMs 117-1 and 117-2 ((a) of Fig. 8). Cross connection is established between the ONT and the OLT in units of virtual path (VP). A unit of cells being queued is a unit carried in a virtual path. DBA parameters are usually set such that a minimum assigned bandwidth Gmin=ΣMCR, producing a period 1/Gmin which is equal to 2 cell time units. A maximum assigned bandwidth BWmax is either equal to ΣPCR or a bandwidth used in DBA. Fig. 8 shows that a period of 1/Gmax=0.5 cell time units occurs in a congested state. When cells are transmitted at a rate larger than Gmin while the assigned bandwidth remains Gmin, cells are accumulated in the ONT 116 (Tup① and Tup② of (b) of Fig. 8). Subsequent to this, when a determination that a congestion occurs is given in the ONT 116 or the OLT 101 so that the assigned bandwidth is increased to Gmax, and assuming that the VC connection 122-1 is mostly used, a group of cells belonging to the VC connection 122-1 that accumulated are instantly transmitted. Cells having an abnormal CDV are temporarily transmitted from the ONT 116 to the OLT 101 (Tup③ of (b) of Fig. 8). For this reason, CDV of the VC connection 122-1 is temporarily increased. Cells transmitted from the ONT 116 produce an observation of an abnormal CDV in the UPC 103 of the OLT 101 ((c)(d) of Fig. 8).

The present invention is designed to resolve the aforementioned problems and has an objective of providing optical line terminal, an APON system and a cell delay control method capable of controlling a CDV caused as a result of applying DBAto an OLT of an APON system.

## SUMMARY OF THE INVENTION

The aforementioned objective is achieved by an optical line terminal in an APON system with dynamic bandwidth assignment, comprising a shaper unit for shaping cells from an optical network terminal and a usage parameter control for monitoring the traffic of the cells shaped by the shaper unit. The objective can also be achieved by the APON system and the cell delay variation control method according to the invention.

By defining a shaping rate in consideration of CDV prescribed in the UPC, CDV in an APON section is cancelled and the UPC is prevented from observing an abnormal CDV resulting from the use of DBA.

By ensuring that the shaper unit is provided with shapers for respective virtual channel (VC) connections such that a buffer size thereof is adapted for a maximum CDV and a shaping rate is defined in consideration of CDVT presribed in the UPC, CDV in the APON section is cancelled and the UPC is prevented from observing an abnormal CDV resulting from employing DBA, even when an abnormal CDV occurs in a particular VC connection resulting from the use of DBA.

By providing the shaper unit with shapers for respective virtual path (VP) connections, the number of shapers (VP by VP shapers) is reduced compared to that of an VC by VC arrangement of shapers. Due to the effect of statistical multiplexing, the total buffer size required in the VP by VP shapers is smaller than that of the VC by VC shaper arrangement.

By providing shapers for respective grant control units, the number of shapers (GTU by GTU shapers) is reduced compared to that of a VC by VC arrangement or a VP by VP arrangement of shapers. Due to the effect of statistical multiplexing, the total buffer size required in the GTU by GTU shapers is smaller than that of the VC by VC arrangement or the VP by VP arrangement of shapers.

## BRIEF DESCRIPTION OF THE DRAWINGS

Other objects and further features of the present invention will be apparent from the following detailed description when read in conjunction with the accompanying drawings, in which:

Fig. 1 shows an example of construction of an ATM based passive optical network system according to the present invention;
Fig. 2 shows a detailed construction of an optical line terminal according to the invention;
Fig. 3 is a time chart in which a consideration is given of a response time;
Fig. 4 shows a detailed construction of an optical line terminal according to a second embodiment of the present invention;
Fig. 5 shows a detailed construction of an optical line terminal according to a third embodiment of the present invention;
Fig. 6 shows a construction of an ATM based passive optical network system according to the related art;
Fig. 7 shows an example of operation in connection control according to the related art; and
Fig. 8 is a time chart showing a specific example of phenomenon in which an abnormal CDV is observed in an APON system according to the related art.

## DETAILED DESCRIPTION OF THE PREFERRED EMBODIMENTS

First embodiment

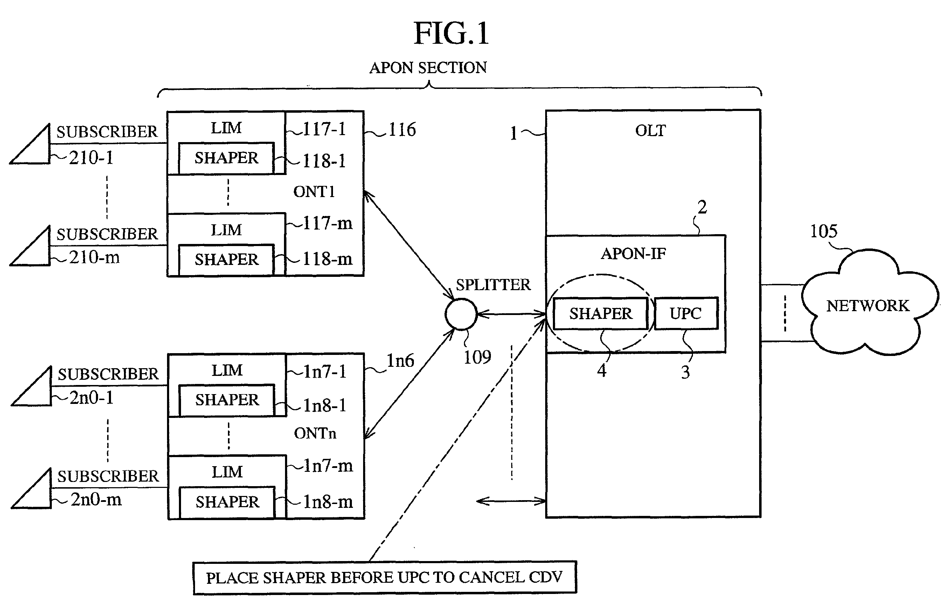

Fig. 1 shows an example of construction of an APON system according to the present invention. Referring to Fig. 1, the system comprises an OLT (optical line terminal), an APON-IF which constitutes a subscriber termination, a usage parameter control (UPC) 3, and a bandwidth shaper unit 4. The system is configured such that CDV occurring in the APON section as a result of employing DBA is controlled by the bandwidth shaper unit 4.

Those components corresponding to the components of the related-art APON system of Fig. 6 are identified by the same reference numerals.

A detailed description will now be given of the operation of the APON system according to the invention.

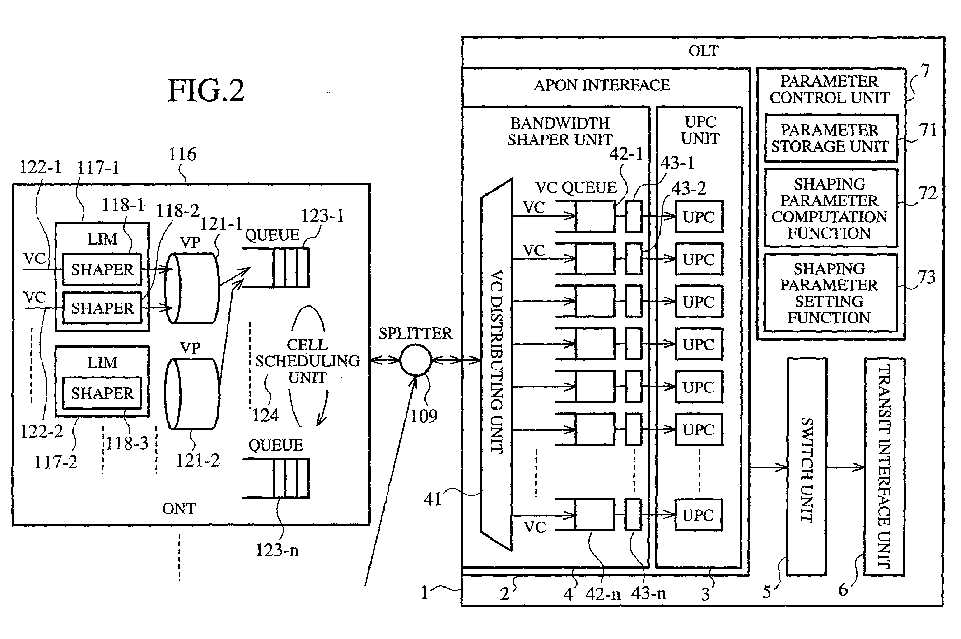

Fig. 2 shows a detailed construction of the OLT 1. Referring to Fig. 2, the OLT 1 comprises a switch unit 5 for subjecting data from the APON-IF 2 to switching, and a transit interface unit 6 for forwarding data from the switch unit 5 to a network. A VC distributing unit 41 data in the bandwidth shaper unit 4 ditributively forwards data from the ONTs 116 - 1n6 VC by VC. VC queues 42-1 - 42-n are provided for each VC in the bandwidth shaper unit 4. VC by VC shapers 43-1 - 43-n are provided in the bandwidth shaper unit 4 for respective VCs.

A parameter control unit 7 is provided with a parameter storage unit 71, a shaping parameter computation function 72 and a shaping parameter setting function 73.

Parameters are set in the parameter storage unit 71 of the parameter control unit 7 through external operation and management. The parameters set include parameters prescribed in the UPC 3 including a peak cell rate (PCR), a cell delay variation tolerance (CDVT), a sustainable cell rate (SCR), and also include DBA parameters including a minimum assigned bandwidth, a maximum assigned bandwidth, a bandwidth update period, a current assigned bandwidth, a queue length at the ONT and a ranging time. The method of setting these parameters is not directly related to the present invention so that the description thereof is omitted. When an instruction for setting the parameters is provided through external operation and management, the shaping parameter computation function 72 of the parameter control unit 7 reads the parameters from the parameter storage unit 71, so as to compute a buffer size and a shaping rate of the VC by VC shapers 43-1 - 43-n. The method of computing the buffer size will be described later. The method of computing the shaping rate is not directly related to the present invention so that the description thereof is omitted. The shaping parameter setting function 73 sets the values obtained as a result of computation in the shaping parameter computing function 72 in the VC by VC shapers 43-1 - 43-n.

In determining the buffer size of the VC by VC shapers 43-1 - 43-n, a consideration should be given to the fact that the buffer size should be sufficient to temporarily store cells characterized by an abnormal CDV created as a result of employing DBA so that these cells are subject to shaping by the VC by VC shapers 43-1 - 43-n. A description will now be given of the above consideration.

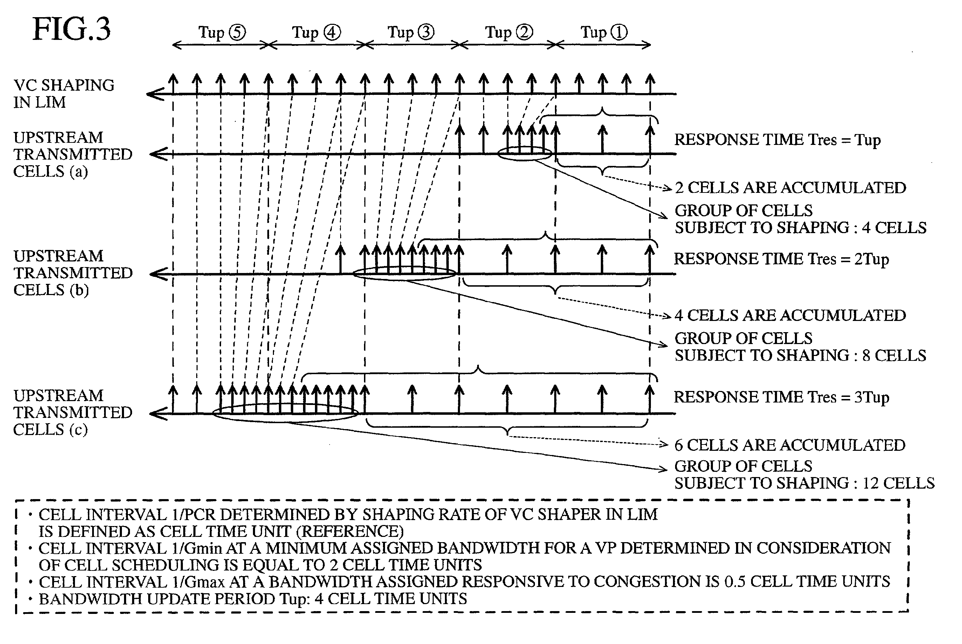

Fig. 3 shows how an abnormal CDV is generated in a particular VC connection (for example, the VC connection 122-1 of Fig. 2). Fig. 3 is a time chart in which a response time is considered. A response time is defined as a period of time that elapses since the start of accumulation of cells shaped by the LIM 117-1 of the ONT 116 of Fig. 2 in the buffer of the ONT 116 until the OLT 1 determines that a congestion occurs, causing DBA to increase an assigned bandwidth and causing cells to be transmitted in the increased bandwidth in a subsequent bandwidth update period. In this period of time, cells are accumulated in the queue 123-1 of the ONT 116 of Fig. 2. In Fig. 3, the response time is represented as a multiple of a bandwidth update period Tup. Cases are illustrated where the response time is equal to Tup, 2Tup or 3Tup, respectively. In the VC connection 122-1, a maximum cell rate produces a period of 1/PCR, which is equal to 1 cell time unit (reference), and a minimum cell rate produces a period of 1/MCR, which is equal to 2 cell time units. A bandwidth update period of 4 cell time units is defined by DBA. DBA parameters are set such that a minimum assigned bandwidth Gmin=ΣMCR, producing a period 1/Gmin which is equal to 2 cell time units. A maximum assigned bandwidth BWmax is either equal to ΣPCR or a bandwidth used in DBA. Fig. 3 shows a case where a cell interval is 1/Gmax=0.5 cell time units when a maximum bandwidth BWmax is assigned to the VC connection 122-1 which is in a state of congestion.

Fig. 3 shows how a VC shaper 118-1 in the LIM 117-1 continuously outputs cells of the VC connection 122-1 of Fig. 2. Cells are output from the ONT 116 to the OLT 1 at the minimum assigned bandwidth. Since a rate of cell transmission from the LIM 117-1 is larger than the rate of output from the ONT 116 to the OLT, cells continue to be accumulated in the queue 123-1 of the ONT 116 until an elapse of the response time. After the response time elapses, the assigned bandwidth is increased so that cells are output from the ONT 116 to the OLT 1 at the increased bandwidth. The cells that remained in the queue are output at a rate greater than the rate of cell transmission from the LIM 117-1 due to the increase in the assigned bandwidth. While the cells that remained in the queue are being output, additional cells may arrive at the queue 123-1 of the ONT 116 from the LIM 117-1.

Referring to Fig. 3, when the response time=Tup, 2 cells are accumulated in the queue until the response time (Tup① of upstream transmitted cells (a)) elapses. While the remaining cells are being output, 2 cells arrive from the LIM 117-1 (Tup② of upstream transmitted cells (b)). As a result of this, the group of 4 cells causes an abnormal CDV to be detected (group of cells subject to shaping at Tup② of upstream transmitted cells (a)). The last cell in this group of cells causes an observation of a maximum CDV at the UPC 3 of the OLT 1. The VC by VC shapers 43-1 - 43-n provided before the UPC 3 of the OLT 1 are assigned a task of shaping the group of cells. It is not necessary to provide a buffer for cells other than the cells subject to shaping (cells other than the cells subject to shaping at Tup② of upstream transmitted cells (a)).

In the example of Fig. 3, the group of cells subject to shaping includes 4 cells when the response time is equal to Tup (the cells subject to shaping at Tup② of upstream transmitted cells (a)), 8 cells when the response time is equal to 2Tup (the cells subject to shaping at Tup③ of upstream transmitted cells (b)), and 12 cells when the response time is equal to 3Tup (the cells subject to shaping at Tup④ ⑤ of upstream transmitted cells (c)). A description of a method of computing the number of cells subject to shaping will be given later. The buffered cell group is output to the UPC 3 at a shaping rate of the VC by VC shapers 43-1 - 43-n provided before the UPC 3 of the OLT 1. The shaping rate is defined so as not to exceed a CDVT prescribed in the UPC 3. In the example of Fig. 3, the group of cells subject to shaping comprising 4 cells arrive the OLT 1 at the response time Tup. While the cell group is arriving, 2 cells are subject to shaping assuming that a shaping rate of the VC by VC shapers 43-1 - 43-n provided before the UPC 3 of the OLT 1 is equal to PCR. Considering the fact that the VC by VC shapers 43-1 - 43-n responsible for shaping are provided before the UPC 3 of the OLT 1, it is determined that a buffer size of 2 cells should be provided. Similarly, when the response time is 2Tup, a buffer size of 2 cells should be provided, and, when the response time is 3Tup, a buffer size of 8 cells should be provided.

Since the buffer sizes to be set in the VC by VC shapers 43-1 - 43-n are determined in consideration of the response time, they depend on a DBA algorithm.

Expressions used to determine the number of cells subject to shaping and the buffer size are given below.

● Number of cells that remain in a queue of the ONT until the response time Tres elapses

$$B1 = (\text{preset bandwidth for VC connection} - Gmin) *$$

$$Tres$$

Taking into account a total of B2 cells arriving at the ONT from the LIM while the B1 cells are being output from the ONT to the OLT at Gmax, the following expressions are derived.

● Number (B) of cells subject to shaping

$$B = B1 + B2$$

● Number (B3) of cells shaped by the VC by VC shaper provided before the UPC of the OLT before the cells subject to shaping are being output from the ONT to the OLT

$$B3 = B/Gmax * (\text{shaping rate in the VC by VC shaper}$$

$$\text{provided before the UPC of the OLT})$$

From the above, a buffer size BS to be set in the VC by VC shaper provided before the UPC of the OLT is determined as follows.

$$BS = B - B3$$

At initial setting of the bandwidth shaper unit, parameters are set in the VC by VC shaper such that the shaping rate and the buffer size are determined from the parameters of the VC connection and the parameters of DBA. The shaping rate and the buffer size thus determined are set in each of the VC by VC shapers.

As described above, by using a CDV control arrangement in the bandwidth shaper 4 provided with buffers before the UPC 3 of the OLT 1, an abnormal CDV occurring in a particular VC connection as a result of employing DBA is dealt with by canceling a CDV in an APON section and preventing the UPC from observing an abnormal CDV resulting from the use of DBA. This can be accomplished by setting a buffer size adapted for a maximum CDV and setting a shaping rate in consideration of the CDVT prescribed for the UPC 3.

Second embodiment

In the first embodiment, a description is given of the placement of shapers for respective VC connections so as to control CDV. In the second embodiment, a disclosure will be given of the placement of VP by VP shapers.

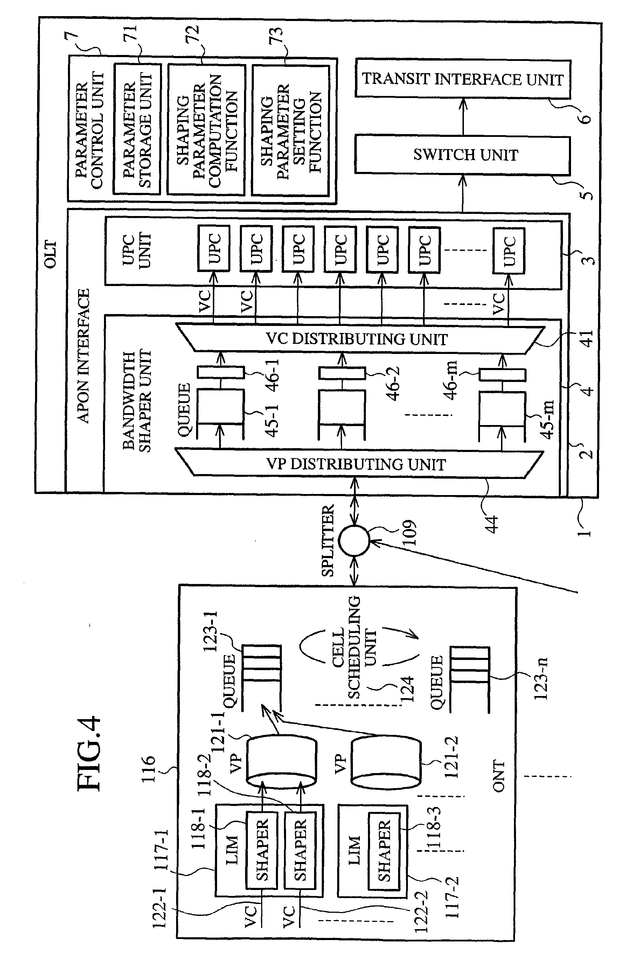

Fig. 4 shows a detailed construction of the OLT 1 according to the second embodiment. The bandwidth shaper unit 4 comprises a VP distributing unit 44 for distributively forwarding data from the ONTs 116 - 1n6 VP by VP, queues 45-1 - 45-m corresponding to respective VPs, VP by VP shapers 46-1 - 46-m corresponding to respective VPs, and the VC distributing unit 41 for distributively forwarding cells past the VP by VP shapers 46-1 - 46-m to the UPC 3 VC by VC. The components corresponding to the components of the first embodiment shown in Fig. 2 are identified by the same reference numerals.

Parameters are set in the parameter storage unit 71 of the parameter control unit 7 through external operation and management. The parameters set include parameters prescribed in the UPC 3 including a peak cell rate (PCR), a cell delay variation tolerance (CDVT), a sustainable cell rate (SCR), and also include DBA parameters including a minimum assigned bandwidth, a maximum assigned bandwidth, a bandwidth update period, a current assigned bandwidth, a queue length at the ONT and a ranging time. The method of setting these parameters is not directly related to the present invention so that the description thereof is omitted. When an instruction for setting the parameters is provided through external operation and management, the shaping parameter computation function 72 of the parameter control unit 7 reads the parameters from the parameter storage unit 71, so as to compute a buffer size and a shaping rate of the VP by VP shapers 46-1 - 46-m. The method of computing the buffer size will be described later. The method of computing the shaping rate is not directly related to the present invention so that the description thereof is omitted. The shaping parameter setting function 73 sets the values obtained as a result of computation in the shaping parameter computing function 72 in the VP by VP shapers 46-1 - 46-m.

In determining the buffer size to be set in the VP by VP shapers 46-1 - 46-m, a consideration should be given to the fact that the cells carried in the VC connections set in the VP statistically multiplexed before arriving at the VP by VP shapers 46-1 - 46-m. Referring to the corresponding disclosure in the first embodiment, a buffer size sufficiently large to cancel a maximum CDV should be set in each of the individual VC by VC shapers 43-1 - 43-n. According to the second embodiment, it is not necessary, owing to statistical multiplexing of the VC connections, for the VP by VP shapers 46-1 - 46-m to have a buffer size set at $\Sigma BS\_vc$, where $\Sigma BS\_vc$ is equal to a sum of buffer sizes set in the VC by VC shapers 43-1 - 43-n for the respective VCs belonging to the VP, the buffer size to be set in the VC by VC shapers 43-1 - 43-n being identical to the that of the first embodiment. When the effect of statistical multiplexing is taken into consideration, it is expected that the buffer size according to the second embodiment is reduced compared to that of the VC by VC shapers 43-1 - 43-n.

The other aspects of the basic operation of the bandwidth shaper unit 4 are the same as the corresponding aspects described in the first embodiment except that the shaping is performed VP by VP, so that the description of the basic operation is omitted.

As described above, providing the shapers for respective VPs results in the number of VP by VP shapers 46-1 - 46-m being smaller than the corresponding number of shapers in an arrangement where the shapers are provided for respective VCs. Owing to the statistical multiplexing effect, the total buffer size required in the VP by VP shapers 46-1 - 46-m is reduced compared to the total buffer size required in the VC by VC shaper arrangement.

Third embodiment

While the second embodiment described a VP by VP arrangement of shapers, a disclosure will now be given of an arrangement of shapers for respective grant control units (hereinafter, referred to as GTUs).

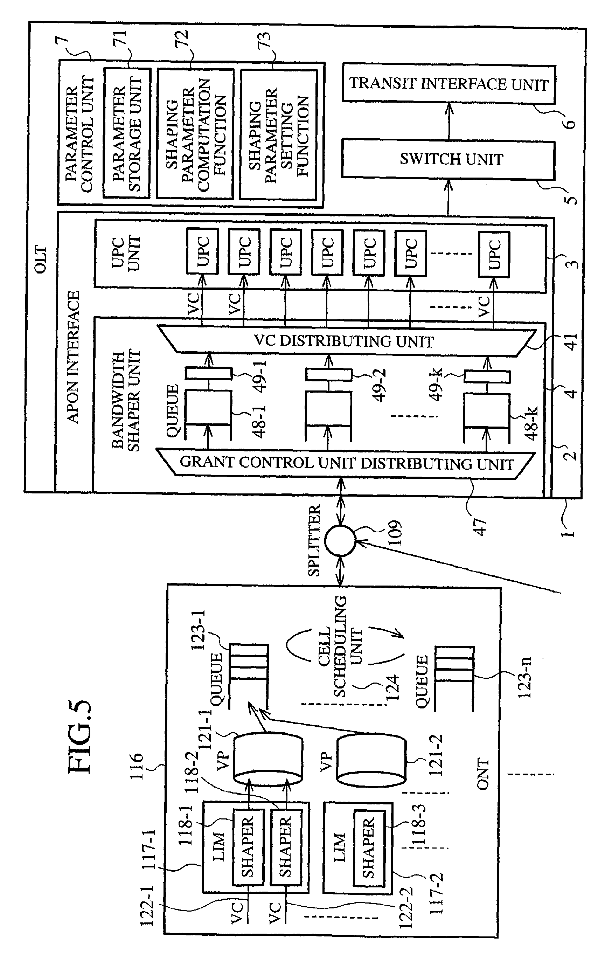

Fig. 5 shows a detailed construction of the OLT 1 according to the third embodiment. The bandwidth shaper unit 4 comprises a grant control unit distributing unit 47 for distributively forwarding data from the ONTs 116 - 1n6 GTU by GTU, queues 48-1 - 48-k corresponding to respective grant control units, GTU by GTU shapers 49-1 - 49-k corresponding to respective grant control units, and the VC distributing unit 41 for distributively forwarding cells past the GTU by GTU shapers 49-1 - 49-k to the UPC 3 VC by VC. The components corresponding to the components of the second embodiment shown in Fig. 4 are identified by the same reference numerals.

Parameters are set in the parameter storage unit 71 of the parameter control unit 7 through external operation and management. The parameters set include parameters prescribed in the UPC 3 including a peak cell rate (PCR), a cell delay variation tolerance (CDVT), a sustainable cell rate (SCR), and also include DBA parameters including a minimum assigned bandwidth, a maximum assigned bandwidth, a bandwidth update period, a current assigned bandwidth, a queue length at the ONT and a ranging time. The method of setting these parameters is not directly related to the present invention so that the description thereof is omitted. When an instruction for setting the parameters is provided through external operation and management, the shaping parameter computation function 72 of the parameter control unit 7 reads the parameters from the parameter storage unit 71, so as to compute a buffer size and a shaping rate of the GTU by GTU shapers 49-1 - 49-k. The method of computing the buffer size will be described later. The method of computing the shaping rate is not directly related to the present invention so that the description thereof is omitted. The shaping parameter setting function 73 sets the values obtained as a result of computation in the shaping parameter computing function 72 in the GTU by GTU shapers 49-1 - 49-k.

In determining the buffer size to be set in the GTU by GTU shapers 49-1 - 49-k, a consideration should be given to the fact that the cells carried in the VC connections set in the VP are statistically multiplexed and the cells carried in the VP connections corresponding to a grant control unit are also statistically multiplexed before arriving at the GTU by GTU shapers 49-1 - 49-k. Referring to the corresponding disclosure in the foregoing embodiments, it is necessary for a buffer size sufficiently large to cancel a maximum CDV should be individually set in each of the VC by VC shapers 43-1 - 43-n, and it is necessary to set a buffer size corresponding to the VP connection in each of the VP by VP shapers 46-1 - 46-m. According to the third embodiment, owing to statistical multiplexing of the VC connections and also the VP connections, it is not necessary for the GTU by GTU shapers 49-1 - 49-k to have a buffer size set at $\Sigma BS\_vc$ or $\Sigma BS\_vp$, where $\Sigma BS\_vc$ is equal to a sum of buffer sizes set in the VC by VC shapers 43-1 - 43-n for the respective VCs belonging to the VP, the buffer size to be set in the VC by VC shapers 43-1 - 43-n being identical to that of the first embodiment, and $\Sigma BS\_vp$ is equal to a sum of buffer sizes set in the VP by VP shapers 46-1 - 46-m for the respective VPs corresponding to the grant control unit. When the effect of statistical multiplexing is taken into consideration, it is expected that reduction in the buffer size from that of the VC by VC shapers 43-1 - 43-n and the VP by VP shapers 46-1 - 46-m is available.

The other aspects of the basic operation of the bandwidth shaper unit 4 are the same as the corresponding aspects described in the second embodiment except that the shaping is performed for respective grant control units, so that the description of the basic operation will be omitted.

As described above, providing the shapers for respective grant control units results in the number of GTU by GTU shapers 49-1 - 49-k being smaller than the corresponding number of shapers in an arrangement where the shapers are provided for respective VCs or respective VPs. Owing to the statistical multiplexing effect, the total buffer size required in the GTU by GTU shapers 49-1 - 49-k is reduced compared to the total buffer size required in the VP by VP shaper arrangement or the VP by VP shaper arrangement.

While the description given above of the first through third embodiment is directed to the use of VC by VC shapers only, VP by VP shapers only and GTU by GTU shapers only, respectively, a combination of the VC by VC shapers 43-1 - 43-n, the VP by VP shapers 46-1 - 46-m and the GTU by GTU shapers 49-1 - 49-k may be provided in the bandwidth shaper unit preceding the UPC 3 in the OLT 1.

Alternatively, the VC by VC shapers 43-1 - 43-n, the VP by VP shapers 46-1 - 46-m and the GTU by GTU shapers 49-1 - 49-k may be combined in the bandwidth shaper unit 4 in the OLT 1 in accordance with the service class (CBR, VBR, UBR and the like). For example, for VC connections at service classes other than UBR (for example, CBR and VBR), the bandwidth shaper unit 4 may be provided, and, for VC connections at the UBR service class in which no guarantee is given of the quality, the bandwidth shaper unit 4 may not be provided so that violating cells are merely tagged by the UPC 3 and allowed to pass through the UPC 3, or simply discarded.

The present invention is not limited to the above-described embodiments, and variations and modifications may be made without departing from the scope of the present invention.

**Claims**

1. An optical line terminal (1) in an ATM based passive optical network system in which dynamic bandwidth assignment is performed between the optical line terminal (1) and an optical network terminal (116-1n6) comprising:

   a shaper unit (4) shaping cells from the optical network terminal; and
   a usage parameter control (3) monitoring the cells shaped by said shaper unit.

2. The optical line terminal according to claim 1, wherein said shaper unit is provided with shapers (43-1 - 43-n) for respective virtual channel connections.

3. The optical line terminal according to claim 1, wherein said shaper unit is provided with shapers (46-1 - 46-m) for respective virtual path connections.

4. The optical line terminal according to claim 1, wherein said shaper unit is provided with shapers (49-1 - 49-k) for respective grant control units.

5. An ATM based passive optical network system in which dynamic bandwidth assignment is performed between an optical line terminal (1) and an optical network terminal (116 - 1n6), wherein said optical line terminal comprises:

   a shaper unit (4) shaping cells from the optical network terminal; and
   a usage parameter control (3) monitoring traffic of the cells shaped by said shaper unit.

6. A cell delay variation control method for an ATM based passive optical network system in which dynamic bandwidth assignment is performed between an optical line terminal (1) and an optical network terminal (116 - 1n6), comprising the steps of:

   shaping cells from the optical network terminal; and
   monitoring traffic of the cells shaped in the shaping step.

# FIG.1

APON SECTION

SUBSCRIBER 210-1 — LIM SHAPER 117-1 / 118-1 — 116 ONT1

SUBSCRIBER 210-m — LIM SHAPER 117-m / 118-m

SPLITTER 109

SUBSCRIBER 2n0-1 — LIM SHAPER 1n7-1 / 1n8-1 — 1n6 ONTn

SUBSCRIBER 2n0-m — LIM SHAPER 1n7-m / 1n8-m

1 — OLT

2 — APON-IF SHAPER 4 UPC 3

105 NETWORK

PLACE SHAPER BEFORE UPC TO CANCEL CDV

EP 1 253 752 A2

FIG.2

PARAMETER CONTROL UNIT 7

PARAMETER STORAGE UNIT 71

SHAPING PARAMETER COMPUTATION FUNCTION 72

SHAPING PARAMETER SETTING FUNCTION 73

TRANSIT INTERFACE UNIT 6

SWITCH UNIT 5

OLT

APON INTERFACE

BANDWIDTH SHAPER UNIT

UPC UNIT

VC QUEUE

42-1  43-1  43-2

UPC  UPC  UPC  UPC  UPC  UPC  UPC  3

42-n  43-n

VC  VC  VC

VC DISTRIBUTING UNIT  2

4  41  1

SPLITTER  109

116

122-1  117-1

118-1  118-2  121-1  123-1

LIM  SHAPER  SHAPER  VP  QUEUE

118-3

LIM  SHAPER  VP  122-2  117-2  121-2

CELL SCHEDULING UNIT  124

QUEUE  123-n

ONT

# FIG.3

**Tup ⑤  Tup ④  Tup ③  Tup ②  Tup ①**

VC SHAPING
IN LIM

UPSTREAM
TRANSMITTED
CELLS (a) — RESPONSE TIME Tres = Tup

→ 2 CELLS ARE ACCUMULATED
GROUP OF CELLS
SUBJECT TO SHAPING : 4 CELLS

UPSTREAM
TRANSMITTED
CELLS (b) — RESPONSE TIME Tres = 2Tup

→ 4 CELLS ARE ACCUMULATED
GROUP OF CELLS
SUBJECT TO SHAPING : 8 CELLS

UPSTREAM
TRANSMITTED
CELLS (c) — RESPONSE TIME Tres = 3Tup

→ 6 CELLS ARE ACCUMULATED
GROUP OF CELLS
SUBJECT TO SHAPING : 12 CELLS

- CELL INTERVAL 1/PCR DETERMINED BY SHAPING RATE OF VC SHAPER IN LIM
  IS DEFINED AS CELL TIME UNIT (REFERENCE)
- CELL INTERVAL 1/Gmin AT A MINIMUM ASSIGNED BANDWIDTH FOR A VP DETERMINED IN CONSIDERATION
  OF CELL SCHEDULING IS EQUAL TO 2 CELL TIME UNITS
- CELL INTERVAL 1/Gmax AT A BANDWIDTH ASSIGNED RESPONSIVE TO CONGESTION IS 0.5 CELL TIME UNITS
- BANDWIDTH UPDATE PERIOD Tup: 4 CELL TIME UNITS

EP 1 253 752 A2

# FIG.4

EP 1 253 752 A2

# FIG.5

FIG.5 — Block diagram showing OLT with parameter control unit (7) including parameter storage unit (71), shaping parameter computation function (72), shaping parameter setting function (73); transit interface unit (6), switch unit (5), APON interface with UPC unit (3) containing multiple UPC blocks, VC distributing unit (41), bandwidth shaper unit (4) with queues (48-1, 48-k) and blocks (49-1, 49-2, 49-k), grant control unit distributing unit (2), connected via splitter (109) to ONT (116) with LIM (117-1, 117-2), shaper (118-1, 118-2, 118-3), VP (121-1, 121-2), queue (123-1, 123-n), cell scheduling unit (124), VC (122-1, 122-2).

# FIG.6

APON SECTION

SUBSCRIBER 210-1

SUBSCRIBER 210-m

LIM 117-1
SHAPER 118-1
ONT1

LIM 117-m
SHAPER 118-m

116

SUBSCRIBER 2n0-1

SUBSCRIBER 2n0-m

LIM 1n7-1
SHAPER 1n8-1
ONTn

LIM 1n7-m
SHAPER 1n8-m

1n6

UPSTREAM TRAFFIC DIRECTION

DOWNSTREAM TRAFFIC DIRECTION

SPLITTER

109

101

OLT

102

APON-IF

UPC

103

105

NETWORK

EP 1 253 752 A2

13

# FIG.7

EP 1 253 752 A2

# FIG.8

(a) VC SHAPING IN LIM

Tup ③    Tup ②    Tup ①

(b) UPSTREAM TRANSMITTED CELLS
FROM QUEUE

4 CELLS ARE ACCUMULATED

(c) IDEAL CELL ARRIVAL IN UPC

(d) CELL DELAY VARIATION IN UPC

INCREASE IN CDV

- CELL INTERVAL 1/PCR DETERMINED BY SHAPING RATE OF VC SHAPER IN LIM IS DEFINED AS CELL TIME UNIT (REFERENCE)
- CELL INTERVAL 1/Gmin AT A MINIMUM ASSIGNED BANDWIDTH FOR A VP DETERMINED IN CONSIDERATION OF CELL SCHEDULING IS EQUAL TO 2 CELL TIME UNITS
- CELL INTERVAL 1/Gmax AT A BANDWIDTH ASSIGNED RESPONSIVE TO CONGESTION IS 0.5 CELL TIME UNITS
- BANDWIDTH UPDATE PERIOD Tup: 4 CELL TIME UNITS
- CELLS CONTINUE TO BE ACCUMULATED FOR A PERIOD OF 2 Tup

EP 1 253 752 A2